(19)

Europäisches
Patentamt
European
Patent Office
Office européen
des brevets

(11) **EP 1 942 624 A2**

(12) **EUROPEAN PATENT APPLICATION**

| | |
|---|---|
| (43) Date of publication:<br>**09.07.2008   Bulletin 2008/28** | (51) Int Cl.:<br>**H04L 27/26** (2006.01)   **H04L 5/02** (2006.01)<br>**H04Q 7/38** (2006.01) |
| (21) Application number: **07023881.1** | |
| (22) Date of filing: **10.12.2007** | |

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventors:<br>• **Teo, Koon Hoo**<br>**Lexington**<br>**MA 02421 (US)**<br>• **Zhang, Hongyuan**<br>**Santa Clara**<br>**CA 95054 (US)**<br>• **Zhang, Jinyun**<br>**Cambridge**<br>**MA 02141 (US)** |
| (30) Priority:   **08.01.2007   US 620767** | |
| (71) Applicant: **MITSUBISHI ELECTRIC CORPORATION**<br>**Chiyoda-ku**<br>**Tokyo 100-8310 (JP)** | (74) Representative: **Pfenning, Meinig & Partner GbR**<br>**Patent- und Rechtsanwälte**<br>**Theresienhöhe 13**<br>**80339 München (DE)** |

(54)    **Method for communication in a cellular network using OFDMA for multiple users**

(57)    In a cellular network, symbols are encoded and modulated to produce a modulated signal. The modulated signal is mapped to a subcarrier using a spatial mapping matrix. An inverse fast Fourier transform is applied to the mapped signal to produce groups of tones. The groups of tones are transmitting concurrently to multiple receivers using the same channel as orthogonal frequency-division multiplexing access (OFDMA) signals. There is one group of tones for each receiver.

**EP 1 942 624 A2**

## Description

### Field of the Invention

This invention relates generally to multi-user, multi-cell wireless networks using OFDMA signaling, and more particularly to shared handoff (SH) among cooperative base stations (BS), relay stations (RS), and mobile stations (MS).

### Background of the Invention

Orthogonal frequency-division multiplexing OFDM employs discrete multi-tone modulation. With OFDM, the tones are modulated on a large number of evenly spaced subcarriers using some m-ary of quadrature amplitude modulation (QAM) or phase shift keying, for example. OFDM allows only one user (transceiver station) on a channel at any given time to accommodate multiple users, an OFDM system must use time division multiple access (TDMA) or frequency division multiple access (FDMA).

Orthogonal frequency-division multiplexing access (OFDMA) is a multi-user version of OFDM that allows multiple users to concurrently access the same channel, where a channel includes a group of evenly spaced subcarriers. OFDMA distributes subcarriers among users (transceivers) so multiple users can transmit and receive within the same single RF channel (TDD) or different RF channel (FDD) on multiple subchannels. The subchannels are further partitioned into groups of narrowband "tones." Typically, the number of tone in a subchannel is dependent on the total bandwidth of the subchannel.

The IEEE 802.16 family of standards provides access to cellular networks using OFDMA for multiple users (mobile stations). Normally, the mobile stations (MSs) in a cell gain access to the network via a single access point (AP) in the cell. As defined herein, the AP can be a base station, or a relay station. The relay stations provides a "bridge" between a MS and a BS. Relay stations can be fixed (FRS), nomadic (NRS), or mobile (MRS). The channel from the AP to the MS is called the downlink, while the channel from the MS to the AP is the uplink. A nomadic station is normally stationary and changes its location occasionally, while a mobile station can be expected to move most of the time.

As a MS moves, a handoff process switches the MS from one cell to another. Typically, the handoff occurs when the station approaching a cell boundary. The handoff can either be hard or soft. Hard handoffs use a "break-before-make" technique, i.e., the MS is connected to only one AP at any given time. If adjacent cells use a different RF channel, then a hard handoff switches the MS to a different frequency band. Hard handoffs are not suited for real time applications because there may be an interruption of services.

Soft handoffs enable the MS to retain a connection with one AP until the MS is associated with another AP in a "make-before-break" technique. A soft handoff involves two phase. During the first phase, the MS establishes communications with multiple APs at the physical layer. During the second phase, the MS is switched to one of the APs at the MAC layer.

Soft handoffs are known for code division multiple access (CDMA) networks, e.g., IS-95 (TIA-EIA-95), CDMA2000, and WCDMA networks. In the downlink of CDMA networks, two BSs transmit the same frequency signals modulated by different scrambling codes. The MS can use different de-spreading codes to separate and combine (S&C) the two signals. Similarly, multiple BSs receive the signal transmitted from the MS via the respective uplinks. The detected signals are sent to a mobile switching center (MSC), which then selects the optimal signal and switches the MS accordingly.

To make the CDMA handoff more effective, either cross-BS synchronization, e.g., in the IS-95 and CDMA2000 standards, or careful cross-BS scrambling code assignment, e.g., in WCDMA, is usually required. However, there are two potential problems with CDMA soft handoff. If both BSs assign the same spreading code in the downlink of an IS-95 network, then there is a resource waste. In addition, the cross-BS signaling can increase the system complexity.

It is desired to provide cooperative communication and a shared handoff for OFDMA cellular network.

### Summary of the Invention

In a cellular network, symbols are encoded and modulated to produce a modulated signal. The modulated signal is mapped to a subcarrier using a spatial mapping matrix. An inverse fast Fourier transform is applied to the mapped signal to produce groups of tones. The groups of tones are transmitting concurrently to multiple receivers using a single channel as orthogonal frequency-division multiplexing access (OFDMA) signals. There is one group of tones for each receiver.

### Brief Description of the Drawings

Figures 1A, 2, 3, 8 and 9 are schematics of OFDMA wireless cellular networks operating according to embodiments of the invention;

Figure 1B is a method for cooperative communication in OFDMA networks according to an embodiment of the invention;

Figure 4 is a block diagrams of received signals according to embodiments of the invention; and

Figures 5-7 are block diagrams of groups of tones according to embodiments of the invention.

## Detailed Description of the Preferred Embodiment

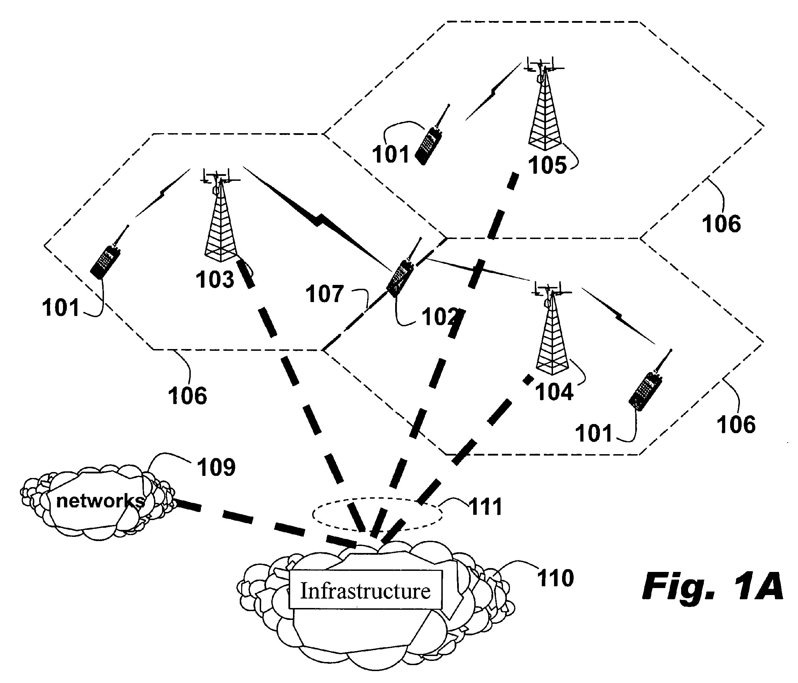

Figure 1A shows wireless network transceiver nodes capable of conducting a shared handoff (SH) according to embodiments of our invention. The network can be a wireless local area network (WLAN) or a wireless metropolitan area network (WMAN). In a preferred embodiment, the network is constructed according to the IEEE 802.16 standard and uses orthogonal frequency division multiple access (OFDMA). To the best of our knowledge, shared-handoffs are not known for OFDMA networks.

The network includes a set of mobile stations (MSs) 101-102, and a set of access points (APs) 103-105. For the purpose of this description, *"access points"* are defined as being either base stations (BSs) or relay station (RSs). Relay stations can be fixed (FRS), nomadic (NRS), or mobile (MRS). A nomadic relay changes location once in a while, and then remains fixed for an extended period of time. A mobile relay is assumed to be constantly on the move. Each AP is associated with a cell 106. For convenience, the cells are shown as hexagons, however, in practice the shape and size of the cell depends on the transmission pattern of the APs, e.g., substantially circular, and cells can overlap.

The APs are connected to a "back bone" or infrastructure 110. The infrastructure enables the APs to communicate cooperatively with each other, and with other networks 109 using wired or wireless connections 111.

Without loss of generality, each mobile station, or access point can operate as a transceiver. The transceiver has a transmitter and a receiver portion. Each portion can include one or more (transmit or receive) RF chains connected to corresponding antennas. In the case of multiple antennas at a single transceiver, the network is a MIMO network.

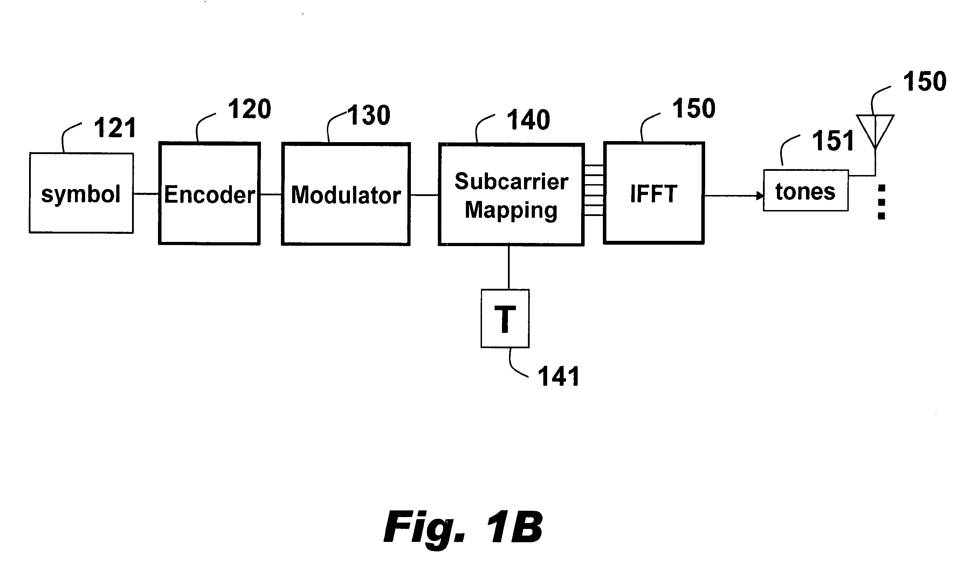

As shown in Figure 1B, a method for cooperative communication in the network includes the following steps. In each transmitter, a symbol 121 is encoded 120. The encoded signal is modulated 130 to a modulated signal. Subcarrier mapping is applied 140 to modulated signal using a mapping matrix 141. This is followed by an inverse Fourier transform (IFFT) 150 to produce groups of tones 151. Conventional parallel-to-serial, digital-to-analog, and RF processing can then be applied. The groups of tones are subsequently transmitted concurrently as RF OFDMA signals via one or more antennas to one or more receivers using a single channel. If the set of transmitters are access points, the signals (groups of tones) are transmitted on a downlink channel to one or more mobile stations. If the transmitters are mobile stations, the signals are transmitted on an uplink channel to access points.

While the transmitter (MS) is communicating with multiple receivers (APs), or vice versa, a shared handoff can be performed. Alternatively, at the same time, multiple APs, in turn transmit to a single receiving MS.

Most of the time, a MS in a particular cell only communicates with a single AP approximately at the center of the cell. We call this normal operation the *non-shared mode.* However, if the MS 102 is near a boundary 107 between the APs 103-104, then the MS 102 according to an embodiment of the invention can communicate concurrently with multiple APs. We call this operation the *shared mode.*

While the MS 102 is operating near the boundary 107, it is desired to perform a shared handoff (SH). In addition, it is desired to make the shared handoff seamless, i.e., the user is not aware of the handoff. At the same time, while the MS is relatively far from the APs, it is desired to combine received signals, if possible, to improve signal strength and performance, particularly in the case where a nomadic MS (or RS) remains at the boundary for an extended period of time. In all of these case, the MS and corresponding APs operate in the shared mode. It should be noted that the combining can be done at the MS and the multiple APs.

**Shared Handoff**

During a conventional soft handoff, the data and signals that are communicated between the mobile station and multiple access points are essentially the same. This has some advantages. The signals can be combined using beamforming to improve reception and reduce errors. Having identical signals at two access points also simplifies the soft handoff. Either access point can be dropped at any time, in favor of another, without losing any data. However, in the cooperative communications as described herein, the mobile station can concurrently communicate different data and/or different signals with different access points. This improves throughput. However, this complicates the handoff. Now, it is no longer simply possible to perform a soft handoff, and may not be appropriate to disconnect from one of the access points. Instead, the cooperating access points need to be aware of the multiple data streams, and the access points that continues to communicate with the mobile station needs to integrate the data stream of the disconnected access point in its communications with the mobile station.

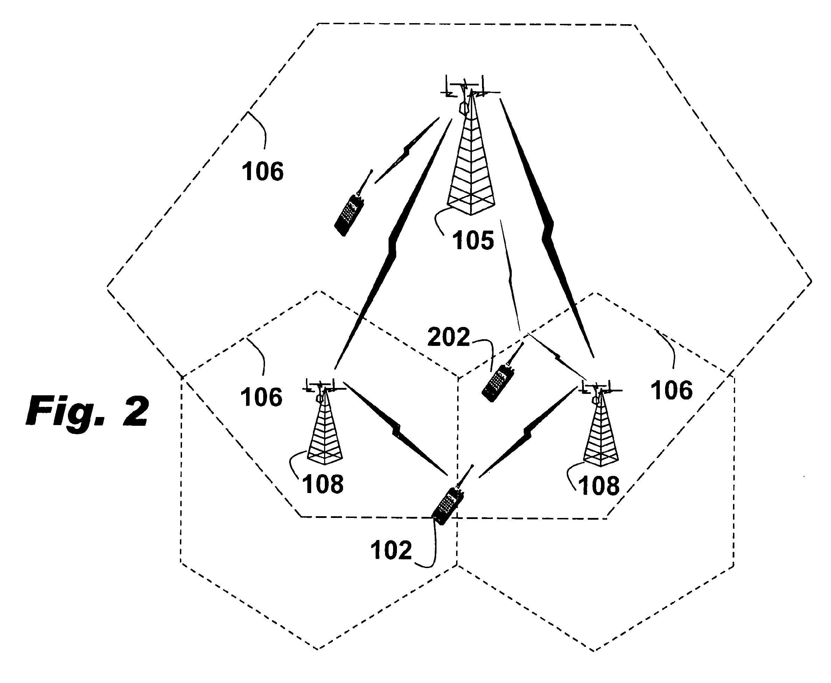

Figure 2 shows a wireless network that includes the base station (BS) 105 and relay stations (RSs) 108. In this case, the SH can be between a two BSs, between two RSs, or between a RS and a BS. For the purpose of this description, when a RS is handing off, it behaves as a MS, and the following description applies equally to a MS and any type of RS.

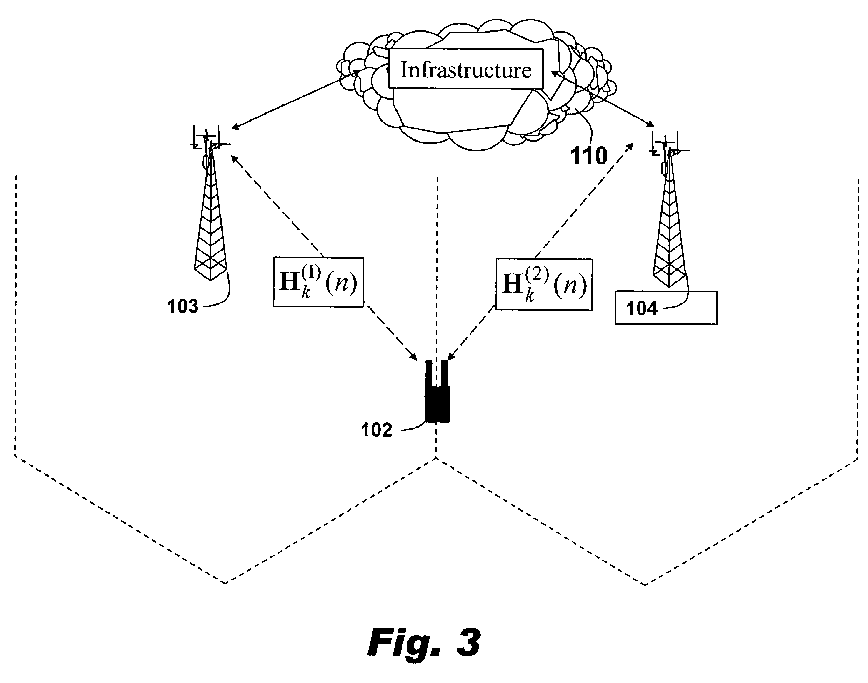

Figure 3 shows a simplified version of our network. The MS 102 and APs 103-104 desire to perform a SH. The channel state information (CSI) in the channel between the AP $b$ (either 1 or 2), and the MS $k$ for the $n^{th}$ tone in a group of tones is denoted by a channel matrix $\mathbf{H}_k^{(b)}(n)$ of dimension $N_R^{(k)} \times N_T^{(b)}$, in which $N_T^{(b)}$ is the number of transmit antennas for the downlink at the AP $b$, and $N_R^{(k)}$ is the number of receive antennas at the MS $k$.

The matrix $\mathbf{T}_k^{(b)}(n)$ is the transmit spatial mapping matrix for the MS $k$ at the AP $b$ for the $n^{th}$ tone, of size $N_T^{(b)} \times L_k$, in which $L_k$ is the number of data streams for the signal transmitted to the MS $k$ using multiple antennas. The spatial mapping matrix selects the transmit antennas at the PA. The set of associated APs can be one or more.

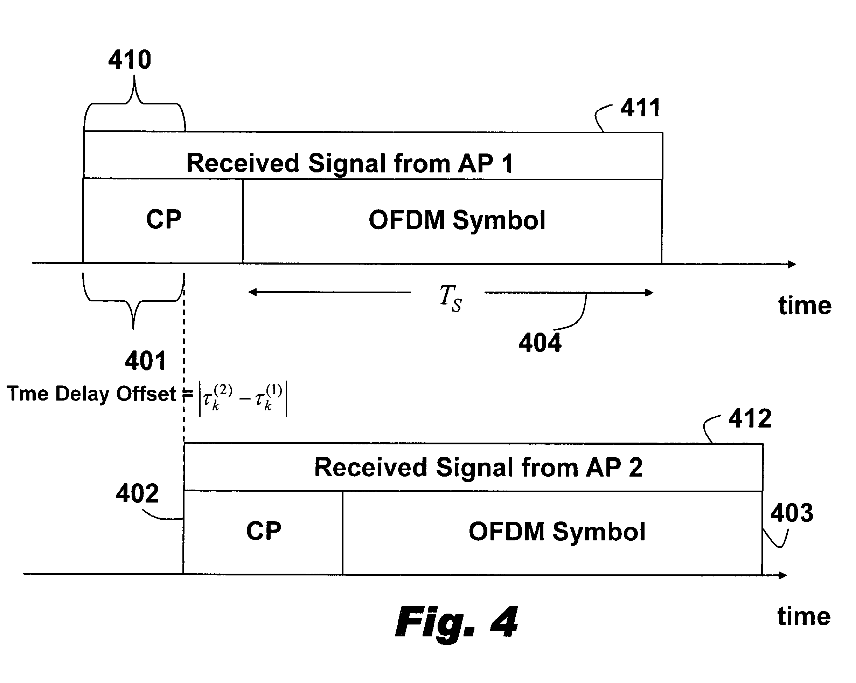

Figure 4 shows a time delay time offset 401 for two signals 411-412 transmitted by the two cooperative APs 103-104 and received by the MS $k$ 102. Each signal includes a cyclic prefix (CP) 402 during a time interval 410, and an (encoded/modulated/mapped) OFDM symbol 403 having a symbol time $T_s$ 404. The CP reduces inter symbol interference in multipath environments. The two signals 411-412 overlap at least during the time the CP 402 is transmitted.

In the $n^{th}$ tone, the received $N_R^{(k)} \times 1$ signal vector in the downlink from the APs to the MS $k$ can be expressed by:

$$\mathbf{y}_k(n) = \sum_{b \in \Psi_k} \tilde{\mathbf{H}}_k^{(b)}(n) \mathbf{T}_k^{(b)}(n) \mathbf{s}_k(n) + \mathbf{v}_k(n) , \qquad (1)$$

where $\tilde{\mathbf{H}}_k^{(b)}(n) = \mathbf{H}_k^{(b)}(n) e^{-j2\pi n \tau_k^{(b)} / T_s}$ is the equivalent channel state, taking into consideration the phase shifts caused by inaccurate timing synchronization, and the time delay offsets, $\tau_k^{(b)}$ is the interval between the sampling starting point at the receiver and the actual arriving time of the signal transmitted by the AP $b$ for MS $k$, $T_s$ is the OFDM symbol interval without the CP, $\mathbf{T}_k^{(b)}(n)$ is the spatial mapping matrix for the signal intended for the MS $k$ and transmitted from AP $b$, $\Psi_k$ represents the set of APs involved in the shared mode for the MS $k$, and the $L_k \times 1$ vector $\mathbf{s}_k(n)$ represents the transmitted symbols for MS $k$; and the $N_R^{(k)} \times 1$ vector $\mathbf{v}_k(n)$ is additive noise.

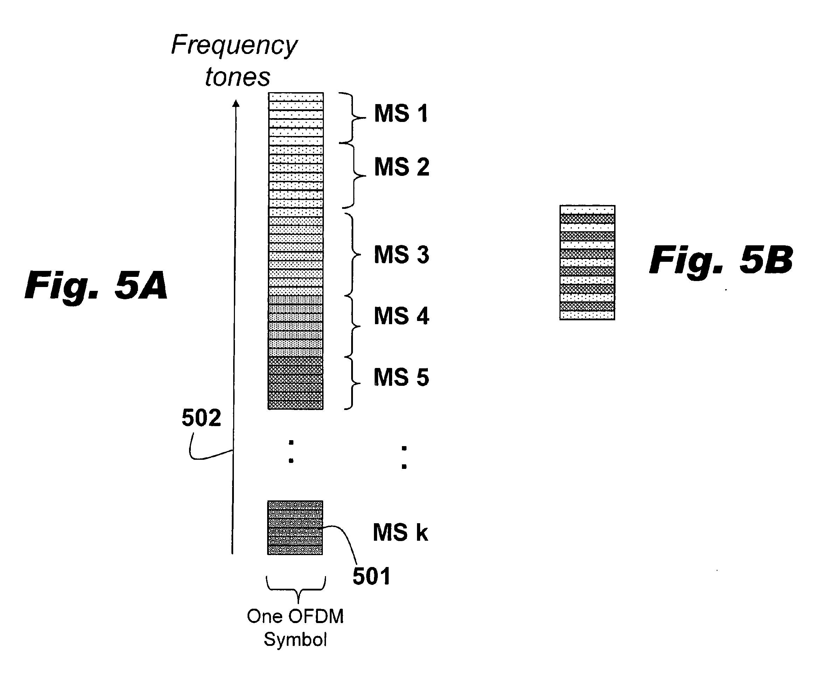

Figure 5A shows disjoint groups of tones 501 for OFDMA signals for different MSs. The tones are spread over a range of frequencies 502. This transmission scheme can be conducted either in the uplink or in the downlink. As shown in Figure 5B, the groups of tones can also be allocated to different MS in an "frequency interleaved" manner, in which the tones in a group do not necessarily have consecutive frequencies.

For convenience of this description, AP and MS are used to describe the different shared mode processes. However, the extension to RS is straightforward.

**Separation and Combining (S&C) Shared Mode in the Downlink**

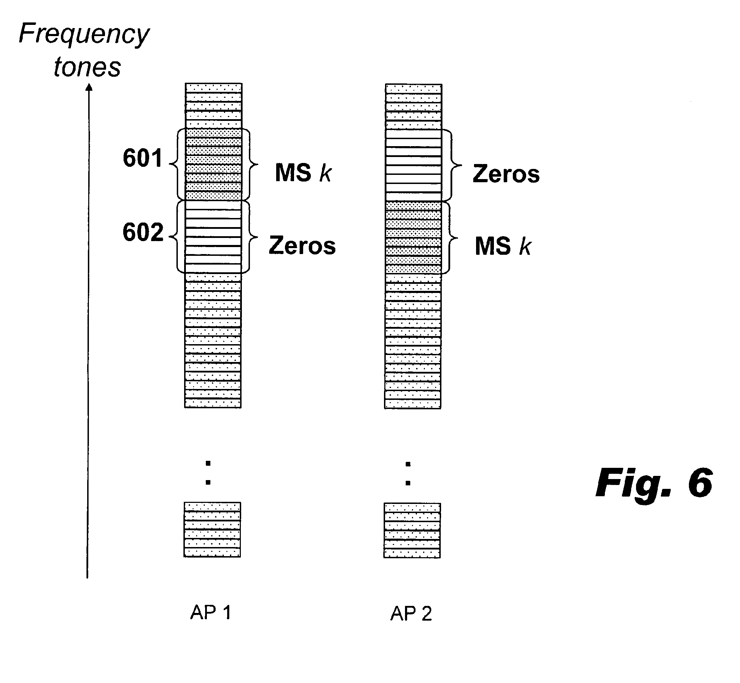

In this case as shown in Figure 6, two cooperative APs (AP 1 and AP 2) in the set $\Psi_k$ transmit signals 601 to the MS $k$ in disjoint sub-group of tones, and transmit zero symbols 602 on any tones allocated to the MS $k$ by another APs in the set $\Psi_k$.

Thus, the MS $k$ is able to separate signals coming from different APs. Furthermore, after the separation, the signals can be combined to increase the overall signal strength.

The cooperative APs in the set $\Psi_k$ can separately specify the spatial mapping matrix $\mathbf{T}_k^{(b)}(n) \mathbf{s}_k(n)$ as for any AP. Therefore, Equation (1) becomes:

$$\mathbf{y}_k(n) = \tilde{\mathbf{H}}_k^{(b)}(n)\mathbf{T}_k^{(b)}(n)\mathbf{s}_k(n) + \mathbf{v}_k(n),$$

$$(2)$$

when tone $n$ is transmitted by AP $b$ to MS $k$.

Alternatively, the cooperative APs can transmit the same symbols $\mathbf{s}_k(n)$ to the MS $k$, and jointly specify the spatial mapping matrices $\mathbf{T}_k^{(b)}(n)$ for the cooperative APs and different tones to achieve spatial diversity or frequency multiplexing gains.

In the case of the symmetric allocation of tones as shown for the example in Figure 6, different APs transmit to the MS $k$ using an identical number ($N_k$) of tones that are disjoint with each other. The received signals in the tones allocated to the two APs can be combined at the receiver to form an $2N_R^{(k)} \times 1$ vector:

$$\begin{bmatrix} \mathbf{y}_k(n) \\ \mathbf{y}_k(n+N_k) \end{bmatrix} = \begin{bmatrix} \tilde{\mathbf{H}}_k^{(1)}(n) & \tilde{\mathbf{H}}_k^{(2)}(n+N_k) \end{bmatrix} \begin{bmatrix} \mathbf{T}_k^{(1)}(n) \\ \mathbf{T}_k^{(2)}(n+N_k) \end{bmatrix} \mathbf{s}_k(n) + \begin{bmatrix} \mathbf{v}_k(n) \\ \mathbf{v}_k(n+N_k) \end{bmatrix}. \quad (3)$$

Therefore, the spatial mapping matrix $\begin{bmatrix} \mathbf{T}_k^{(1)}(n) \\ \mathbf{T}_k^{(2)}(n+N_k) \end{bmatrix}$ can be jointly specified, and the symbols $\mathbf{s}_k(n)$ can be jointly detected and combined according to Equation (3), by using any known MIMO detection technique.

In the case that the MS cannot be informed of the current mode of operation, as in "seamless" SH, the tone allocation to be used during the shared mode is signaled to the MS before any symbols are transmitted in the shared mode, and the transmission scheme in Equation (2) can be applied.

Therefore, the tone allocation for the MS $k$ contains all the tones transmitted to the MS $k$ from the APs in the set $\Psi_k$, as shown in Figure 6. In this case, the AP cooperation extends the effective bandwidth assigned to the MS $k$. That is, the data rate for the MS $k$ is increased, while the coding and interleaving over the transmitted tones for the MS $k$ from all the APs achieves spatial and/or frequency diversity.

If the wireless network is capable of processing the received signals according to Equation (3), e.g., by maximum ratio combining (MRC) when $L_k = 1$ or $N_R^{(k)} = 1$, and any MIMO detection scheme when $L_k \geq 2$, then the corresponding signaling scheme for the transmission from the PS to the MS uses Equation (3) for transmitting the tones.

In the case that the MS can be informed of the mode, e.g., in the case of a mobile multi-hop relay (MMR) IEEE 802.16j networks with SH for MRS or NRS, then the receiver can process the received signals according to either Equation (2) or (3), with appropriate signaling.

In Equations (2) and (3), the spatial mapping matrix $\{\mathbf{T}_k^{(b)}(n)\}$ can be based on channel state information (CSI), or without CSI, corresponding respectively to closed-loop and open-loop designs. In this S&C shared mode case, the number of tones allocated to a single MS is increased.

**Non S&C Shared Mode in the Downlink-Open-Loop MIMO**

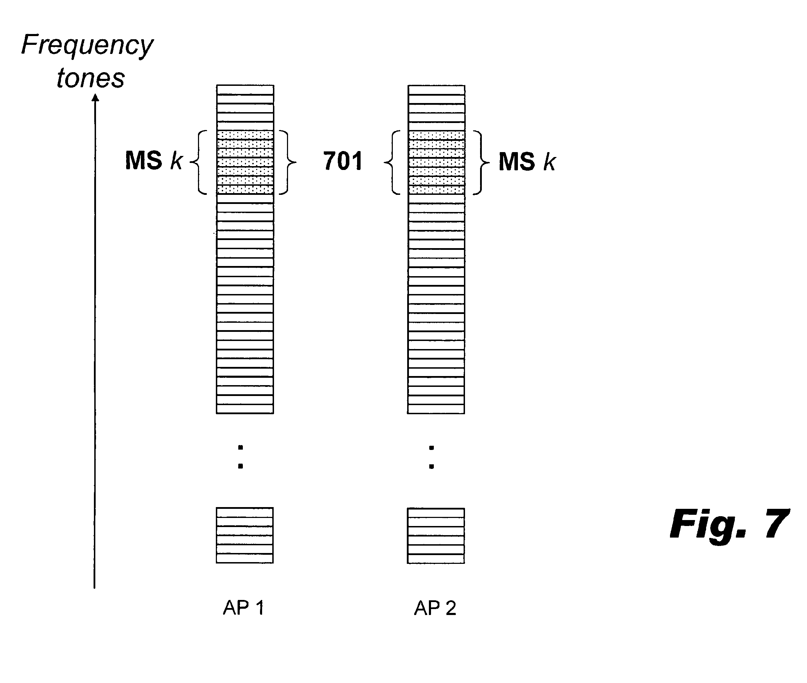

In this case for non S&C shared mode in the downlink as shown in Figure 7, all the APs in the set $\Psi_k$ transmit signals to the MS $k$ using the same group of tones 701, as in the non-shared mode. This is particularly suitable for seamless SH applications.

The received signal at the MS $k$ and tone n can be expressed as:

$$\mathbf{y}_k(n) = \sum_{b \in \Psi_k} \tilde{\mathbf{H}}_k^{(b)}(n) \mathbf{T}_k^{(b)}(n) \mathbf{s}_k(n) + \mathbf{v}_k(n)$$

$$= \tilde{\mathbf{H}}_k(n) \mathbf{T}_k(n) \mathbf{s}_k(n) + \mathbf{v}_k(n) \qquad , \qquad (4)$$

where $\tilde{\mathsf{H}}_k(n) = [\tilde{\mathsf{H}}^{(1)}{}_k(n)\ \tilde{\mathsf{H}}^{(2)}{}_k(n)]\ldots$ is the composite channel matrix containing the channel states for the signals transmitted by all the APs in the set $\Psi_k$, and the matrix $\mathbf{T}_k(n) = \begin{bmatrix} \mathbf{T}_k^{(1)}(n) \\ \mathbf{T}_k^{(2)}(n) \\ \vdots \end{bmatrix}$ is the joint spatial mapping matrix for all the APs in

the set $\Psi_k$. The channel estimation conducted at the MS $k$ derives an estimation of an equivalent channel state:

$$\tilde{\mathbf{H}}_k^{eq}(n) = \tilde{\mathbf{H}}_k(n) \mathbf{T}_k(n). \qquad (5)$$

Because the MS $k$ always observe an equivalent channel of dimension $N_R^{(k)} \times L_k$ , which is unchanged from the non-shared modes, no extra signaling is required to inform the MS of the shared mode. Hence, this scheme can be applied in seamless SH applications.

If $L_k = 1$, then diversity is achieved. In this case, a single data (symbol) stream for the MS $k$ can be transmitted more reliably in fading environments. If $L_k \geq 2$ , then both diversity and spatial multiplexing are achieved by SH, due to the spatial redundancy caused by the cooperative APs.

If the CSI is not available at the cooperative APs, then the following two examples of open-loop spatial mapping can be applied.

**Increased Spatial Diversity**

In this case, the spatial mapping matrix $\mathbf{T}_k(n)$ can be pre-determined. If the matrix is an orthogonal matrix, e.g., the Walsh-Hadamard matrix, the symbols $s_k(n)$ are spread evenly over the transmit antennas at all the APs in the set $\psi_k$. By coding and or interleaving, symbols experience an increased number of independent spatial channels, when compared with the non-shared modes. Therefore, spatial diversity can be achieved. The channel conditioning in the matrix $\tilde{\mathsf{H}}_k(n)$ is improved due to separated multipaths from the different APs. Therefore, less spatial correlation is observed from the transmitter side. This is favorable for spatial multiplexed MIMO transmission using multiple antennas.

The switching between shared mode and the non-shared modes can be made seamless. After switching from the shared mode to the non-shared mode, the channel conditioning may degrade. However, link adaptation at the MS may be used to adapt to the degradation.

**Cyclic Delay Diversity (CDD) Spatial Mapping:**

We increase the spatial diversity as described above and assume that the AP $b$ transmits the $N_T^{(b)}$ signal vector $\mathbf{x}_k^{(b)}(t)$ in the time domain to the MS $k$. The CDD spatial mapping applies a time-domain cyclic shift $\tau_{CS}^{(b)}$ to each of the transmitted OFDM symbol, denoted as $\mathbf{x}_k'^{(b)}(t) = \mathbf{x}_k^{(b)}(t - \tau_{CS}^{(b)})$. The values in the delay $\{\tau_{CS}^{(b)}\}$ are made different for different APs $b$. However, the largest difference should be less than the duration of the CP 401, see Figure 4.

By doing this, the corresponding MS $k$ observes a channel that is more delay dispersive, which has a greater frequency-selectivity. By applying coding and interleaving, a larger frequency diversity can be achieved. Because a cyclic shift in time converts to a phase shift in the frequency domain, we have the following spatial mapping matrix:

$$\mathbf{T}_k(n) = \mathbf{Q}_k(n) \begin{bmatrix} e^{-j2\pi n\tau_{CS}^{(1)}/T_s} \mathbf{I}_{N_T^{(1)}} & & & \\ & e^{-j2\pi n\tau_{CS}^{(2)}/T_s} \mathbf{I}_{N_T^{(2)}} & & \\ & & \ddots & \end{bmatrix}, \qquad (6)$$

where $\mathbf{Q}_k(n) = \begin{bmatrix} \mathbf{Q}_k^{(1)}(n) \\ \mathbf{Q}_k^{(2)}(n) \\ \vdots \end{bmatrix}$ represents the spatial mapping that achieves an increase in spatial diversity as described above, i.e., as the above spatial mapping matrix $\mathbf{T}_k(n)$, where $\mathbf{I}_{N_T^{(b)}}$ is the $N_T^{(b)} \times N_T^{(b)}$ identity matrix.

In one simple example, $N_T^{(b)} = N_T, \forall b$, and $\mathbf{Q}_k(n) = \begin{bmatrix} \mathbf{Q}_k^{(1)}(n) \\ \mathbf{Q}_k^{(1)}(n) \\ \vdots \end{bmatrix}$. Therefore,

$\mathbf{x}_k'^{(b)}(t) = \mathbf{x}_k^{(1)}(t - \tau_{CS}^{(b)})$, i.e., the different APs transmit different delayed versions of the same time-domain

signal $\mathbf{x}_k^{(1)}(t)$.

The switching between shared mode and non-shared mode can be made seamless. After switching from the shared mode to the non-shared mode, the channel conditioning, as well as channel delay dispersion, may change.

**Non S&C Shared Mode in the Downlink - Closed-Loop MIMO with Multiuser Spatial Division Multiple Access (SDMA)**

In the closed-loop scheme, the spatial mapping matrices $\{\mathbf{T}_k(n)\}$ are based on the CSI of the downlink. The CSI is available at the cooperative APs. The downlink CSI can be obtained during uplink channel estimations by transmitting training signals from the MS $k$ to all the APs in the set $\Psi_k$, when the uplink is also conducted and time-division duplexing (TDD) for separating the downlink and uplink communications is conducted, assuming reciprocity between the two links.

Typically, closed-loop designs are used in slowly fading environments. Therefore, the CSI used for current spatial mapping can be used. In a closed-loop design, the spatial mapping matrices $\{\mathbf{T}_k(n)\}$ correspond to transmit beamforming (TxBF).

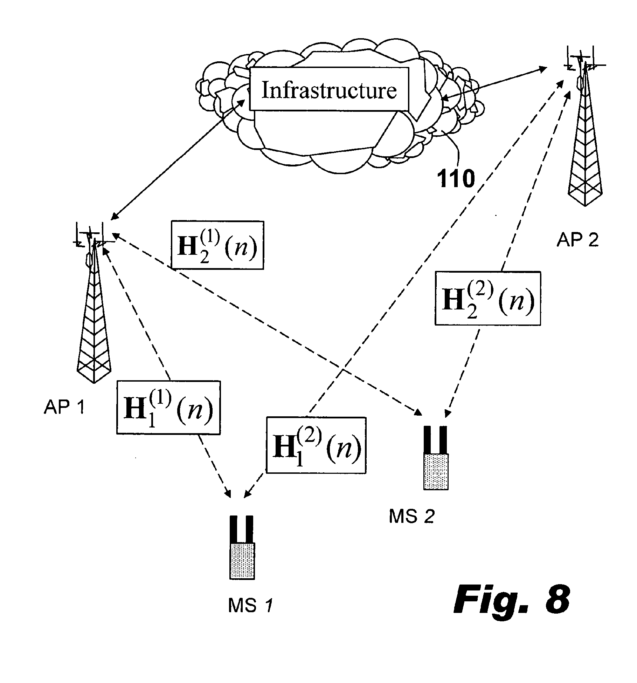

In this case, multiple MSs operating in the shared mode can use the same group of tones. A two-cell, two-MS shared mode scenario is shown in Figure 8, where the two MSs transmit with the same set of tones. Because CSI is available at the APs, the signals for the MS 1 and MS 2 can be separated by appropriate TxBF designs using the spatial mapping matrices $\{\mathbf{T}_k(n)\}$. The APs beamform cooperatively so that the combined signals intended for MS 1 are maximized at MS 1, and minimized at MS 2, and vice versa for MS 2.

In this case, Equation (4) becomes:

$$\mathbf{y}_k(n) = \tilde{\mathbf{H}}_k(n)\mathbf{T}_k(n)\mathbf{s}_k(n) + \sum_{j \in \Gamma_n, j \neq k} \tilde{\mathbf{H}}_j(n)\mathbf{T}_j(n)\mathbf{s}_j(n) + \mathbf{v}_k(n), \qquad (7)$$

where $\Gamma_n$ is the set of mobile stations that operate in the $n$th tone. By stacking $y_k(n)$ for any mobile station $k \in \Gamma_n$ to form

an extended vector of size $\sum_{k \in \Gamma_k} L_k \times 1$, we obtain:

$$\mathbf{y}(n) = \begin{bmatrix} \mathbf{y}_{k_1}(n) \\ \mathbf{y}_{k_2}(n) \\ \vdots \end{bmatrix} = \tilde{\mathbf{H}}_T(n)\mathbf{T}(n)\begin{bmatrix} \mathbf{s}_{k_1}(n) \\ \mathbf{s}_{k_2}(n) \\ \vdots \end{bmatrix} + \begin{bmatrix} \mathbf{v}_{k_1}(n) \\ \mathbf{v}_{k_2}(n) \\ \vdots \end{bmatrix}, \tag{8}$$

where $\tilde{\mathbf{H}}_T(n) = \begin{bmatrix} \tilde{\mathbf{H}}_{k_1}(n) \\ \tilde{\mathbf{H}}_{k_2}(n) \\ \vdots \end{bmatrix}$; $\mathbf{T}(n) = [\mathbf{T}_{k1}(n) \ \mathbf{T}_{k2}(n) \ ...]$; and $K_1, K_2 \in \Gamma_n$.

Therefore, as long as $\tilde{\mathbf{H}}_T(n)$ is known at the cooperative APs, appropriate designs of the mapping matrix $\mathbf{T}(n)$ can effectively reduce the multi-user interference at the receiver of any MS $K \in \Gamma_n$.

For example the matrix $\mathbf{T}(n)$ can be designed based on a nullification criteria: $\tilde{\mathbf{H}}_k(n)\mathbf{T}_j(n) = \mathbf{0}$ for $j \neq k$.

Non-linear designs are also applicable.

To obtain the extended CSI $\tilde{\mathbf{H}}_T(n)$ in Equation (8) at the transmitter, in addition to the CSI, the cooperative APs also need to know the phase shifts in different downlink channels from different APs in each tone, or the corresponding delay offsets in time domain. These can be obtained by knowing the delay dispersions from each of the cooperative APs to the MS(s) in the shared mode. For example, a conventional radio ranging process can determine the delay.

When such phase shifts or delay offsets are not known at the cooperative APs, or the estimations of these parameters are subject to unacceptable errors, the following uplink training protocol can be applied.

We assume that the cooperative APs can be synchronized to the receiver, and that the transmission time and the length of CP can be adjusted, such that if all the signals for all the co-channel MSs are transmitted concurrently by the cooperative APs. Also, each MS $k$ is aligned with the OFDM symbols transmitted from the first arrived signal, and the asynchronous signals from any other AP appear to be only a phase shifted version of the original form in each subcarrier. In this case, the signals can be combined into the equivalent channel estimations.

In TDD, the downlink transmitter channel information can be obtained by a joint training process on the uplink. A time-division protocol for multi-access is applied in the uplink. At any time instance, all the cooperative APs only observe one MS transmitting in the uplink. Then, the APs jointly estimate the corresponding uplink CSI from the known training OFDM symbols, e.g., using pilot symbols or preamble patterns.

Instead of independent time synchronizations for training any MS, all the cooperative APs align their receivers with the first arrival, which corresponds to the propagation between the MS to a closest AP. Therefore, if AP 1 is the closest AP to MS 1, the corresponding estimated CSI at AP 1 is $\mathbf{H}_1^{(1)}(n)^T e^{-j2\pi n \tau_1^{(1)}/T_s}$, and the CSI at AP 2 is $\mathbf{H}_1^{(2)}(n)^T e^{-j2\pi n(\tau_1^{(2)}-\tau_1^{(1)})/T_s}$, assuming no estimation error and strict channel reciprocity between the uplink and the downlink. The estimation for the channels to MS 2 can follow the same procedure.

The channel models of Equations (7) and (8) hold with $\tilde{\mathbf{H}}_T(n)$ known at the joint APs, and joint cooperative beamforming TxBF can be conducted as described above, i.e., a joint design of the matrix $\mathbf{T}(n)$ can reduce interference at all the co-channel MS receivers. The extension to more than two APs and more than two MSs is straightforward. This training procedure does not require timing information estimation.

**Shared Mode on the Uplink**

Two techniques can be employed for shared mode on the uplink to cooperative APs. The APs can receive signals from the MS under shared mode separately, and forward the results to a mobile switching center (MSC) inside the infrastructure 110 where the selection is conducted. Alternatively, the cooperative APs forward directly the received signals, as well as the channel estimations to a processing center, where joint detection can be conducted. In the later case, the set of cooperative APs is equivalent to an extended antenna array over the cooperative APs.

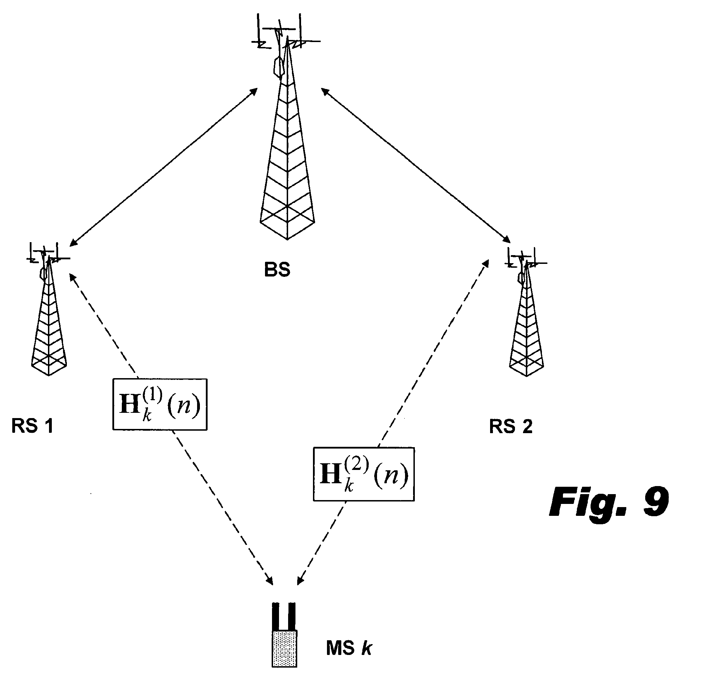

In the case of cooperative relays, e.g., in MMR networks designed according to the IEEE 802.16j standard, as shown in Figure 9 where two RSS are used, the same two techniques can be applied.

For example, in the case of the uplink shared mode, if the transmitted signal in the $n^{th}$ tone from the MS $k$ is $\mathbf{T}_{k\_UL}(n)\mathbf{s}_{k\_UL}(n)$, based on the feedback from the two cooperative RSs, the BS establishes the channel model in the $n^{th}$ tone as:

$$\mathbf{y}_{\_UL}(n) = \begin{bmatrix} \mathbf{y}_{1\_UL}(n) \\ \mathbf{y}_{2\_UL}(n) \end{bmatrix} = \begin{bmatrix} \tilde{\mathbf{H}}_k^{(1)}(n)^T \\ \tilde{\mathbf{H}}_k^{(2)}(n)^T \end{bmatrix} \mathbf{T}_{k\_UL}(n)\mathbf{s}_{k\_UL}(n) + \begin{bmatrix} \mathbf{v}_{1\_UL}(n) \\ \mathbf{v}_{2\_UL}(n) \end{bmatrix}, \quad (9)$$

by which both diversity and spatial multiplexing gains can be explored, on detecting $\mathbf{S}_{k\_UL}(n)$.

**Other Considerations**

The shared mode described above uses synchronizations among the cooperative APs so that the delay offsets from or to the cooperative APs are all within the CP interval 410. Such synchronization can be accomplished by the infrastructure 110 or same ranging capability. An OFDMA with adaptive CP lengths 410 can also be used to cover possibly varying delay offsets.

**Variations**

In MIMO-OFDMA systems, the shared mode schemes described above can still apply when one active MS occupies all the available tones for an OFDM symbol. The closed-loop downlink shared mode described above admits multiple MSs occupying all the available tones.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

**Claims**

1. A method for communicating in a cellular network, comprising at each transmitter in a set of transmitters the steps of:

   encoding symbols;
   modulating the encoded symbols to produce a modulated signal;
   mapping the modulated signal to a subcarrier using a spatial mapping matrix; and
   applying an inverse fast Fourier transform to the mapped signal to produce groups of tones; and then
   transmitting concurrently the groups of tones from the set of transmitters as orthogonal frequency-division multiplexing access (OFDMA) signals to a receiver using a single channel.

2. The method of claim 1, in which the transmitters are access points and the receiver is a mobile station.

3. The method of claim 2, in which frequencies of the groups of tones of a particular transmitter in the set are disjoint from the groups of tones of the other transmitters in the set.

4. The method of claim 3, in which data transmitted from different transmitters are different tones.

5. The method of claim 3, in which at any one time, the groups of tones of all but one of the transmitters in the set represent zero symbols.

6. The method of claim 1, in which at any point of time, only one transmitter in the set is transmitting the group of tones.

7. The method of claim 3, in which the tones in one group of one transmitter in the set are frequency interleaved with the tones of another group of another transmitter in the set.

8. The method of claim 3, in which an equal number of tones are transmitted to the receiver by each transmitter, and in which the same data are transmitted over all of the tones using joint spatial mapping for all the tones at the set of transmitters.

9. The method of claim 3, in which the spatial mapping matrix achieves spatial diversity gains.

10. The method of claim 3, in which the spatial mapping matrix achieves frequency multiplexing gains.

11. The method of claim 1, in which a particular transmitter in the set is transmitting the group of tones to multiple receivers.

12. The method of claim 1, in which each transmitter is transmitting the group of tones to multiple receivers.

13. The method of claim 1, in which the groups of tones are transmitted via multiple antennas.

14. The method of claim 1, in which a single group of tones are received by multiple antennas connected to associated RF chains at a single receiver.

15. The method of claim 14, in which MIMO detection is applied in the receiver.

16. The method of claim 1, in which the groups of tones are transmitted by a single antenna at each transmitter.

17. The method of claim 1, in which the spatial mapping matrix is an orthogonal matrix.

18. The method of claim 1, in which the spatial mapping matrix is based on channel state information for each tone.

19. The method of claim 1, in which frequencies of the groups of tones of one transmitter are the same as the frequencies of the groups of tones of another transmitter, and the transmitters transmit the same data in the same group of tones to the receiver.

20. The method of claim 18, in which the spatial mapping matrix is constructed using a closed loop design.

21. The method of claim 18, in which the spatial mapping matrix is constructed using an open loop design.

22. The method of claim 18, in which the modulated signal includes a cyclic prefix and an OFDM symbol, and further comprising:

   delaying the cyclic prefix and the OFDM symbol of different transmitter in the set with respect to each other.

23. The method of claim 1, further comprising:

   acquiring, at each transmitter, channel state information; and
   designing the spatial mapping matrix at the transmitter according to the channel state information.

24. The method of claim 1, further comprising:

   transmitting the groups of tone to multiple receivers using beamforming.

25. The method of claim 23, in which the receiver is performing a shared handover.

26. The method of claim 24, in which sub-groups of tones of the groups of tones are identical.

27. The method of claims 26, in which the spatial mapping matrices are designed jointly to reduce interference at receiver.

28. The method of claim 18, in which the channel state information on a downlink channel from the transmitter to the receiver is determined from training signals on an uplink channel from the receiver to the transmitter.

29. The method of claim 28, in which multiple receivers transmit training signals consecutively to a particular transmitter to determine the channel state information.

30. The method of claim 1, in which the transmitter is a mobile station, and the mobile station transmits the group of tones to multiple receivers, each receiver being an access points, and the access points forward received signals to an infrastructure to perform a shared handoff.

31. The method of claim 30, in which more than one transmitter is using the same group of tones to transmit to the access points.

32. The method of claim 30, in which the access points forward the channel state information to the infrastructure for joint signal detection.

33. The method of claim 1, in which the set of transmitters are synchronized.

34. The method of claim 22, in which a length of the cyclic prefix is variable depending on an amount of delay.

35. The method of claim 23, in which more than one transmitter is using the same group of tones to transmit to the access points.

**Fig. 1A**

101, 102, 103, 104, 105, 106, 107, 109, 110, 111

Infrastructure

networks

**Fig. 1B**

**Fig. 2**

**Fig. 3**

EP 1 942 624 A2

**410**

**411**

| Received Signal from AP 1 | |
|---|---|
| CP | OFDM Symbol |

$$\longleftarrow \quad T_S \quad \longrightarrow \qquad \text{time}$$

**404**

**401**

Tme Delay Offset $= \left| \tau_k^{(2)} - \tau_k^{(1)} \right|$

**412**

| Received Signal from AP 2 | |
|---|---|
| CP | OFDM Symbol |

**402**

**403**

time

*Fig. 4*

time

Frequency
tones

## Fig. 5A

MS 1

MS 2

MS 3

MS 4

MS 5

502

MS k

501

One OFDM
Symbol

## Fig. 5B

EP 1 942 624 A2

Frequency
tones

EP 1 942 624 A2

601 { } MS *k*

602 { } Zeros

Zeros

MS *k*

AP 1

AP 2

*Fig. 6*

Fig. 7

$\mathbf{H}_2^{(1)}(n)$

$\mathbf{H}_2^{(2)}(n)$

AP 2

AP 1

$\mathbf{H}_1^{(1)}(n)$

$\mathbf{H}_1^{(2)}(n)$

MS 2

MS 1

110

**Fig. 8**

Fig. 9